# EUROPÄISCHE PATENTSCHRIFT

(11) **EP 1 315 896 B1**
(45) Veröffentlichungstag und Bekanntmachung des Hinweises auf die Patenterteilung: **24.05.2006**
(21) Anmeldenummer: 01969593.1
(22) Anmeldetag: 16.08.2001
(51) Int. Cl.: F02D 41/34, F02D 41/06

(54) **VERFAHREN ZUR STEUERUNG EINER KRAFTSTOFF-DIREKTEINSPRITZUNG**
METHOD FOR CONTROLLING THE DIRECT INJECTION OF FUEL
PROCEDE POUR PILOTER UNE INJECTION DIRECTE DE CARBURANT

(30) Priorität: 30.08.2000 DE 10042551
(43) Veröffentlichungstag der Anmeldung: 04.06.2003
(73) Patentinhaber: Volkswagen Aktiengesellschaft, 38436 Wolfsburg (DE)
(72) Erfinder: POTT, Ekkehard, 38518 Gifhorn (DE); SPIEGEL, Leo, 71665 Vaihingen/Enz (DE); LINDLAU, Michael, 38162 Cremlingen (DE); STIEBELS, Bernd, 38528 Adenbüttel (DE)
(74) Vertreter: Reinstädler, Diane
(86) Internationale Anmeldenummer: PCT/EP2001/009429
(87) Internationale Veröffentlichungsnummer: WO 2002/018769

(56) Entgegenhaltungen:
- EP-A- 0 924 416
- EP-A- 0 961 019
- DE-A- 19 913 407
- US-A- 4 389 995
- US-A- 5 113 833
- US-A- 5 482 017
- US-A- 5 979 400

## Beschreibung

Die Erfindung betrifft ein Verfahren zur Steuerung einer Kraftstoff-Direkteinspritzung einer fremdgezündeten Verbrennungskraftmaschine mit den Merkmalen des Oberbegriffs des Anspruchs 1.

Von selbstzündenden und in jüngerer Zeit auch zunehmend von fremdgezündeten Verbrennungskraftmaschinen ist bekannt, eine Kraftstoffeinspritzung als Direkteinspritzung vorzunehmen. Im Gegensatz zu indirekten Einspritzverfahren, bei denen die Kraftstoffmenge in ein dem Brennraum vorgelagertes Saugrohr eingespritzt wird, wird bei der Direkteinspritzung der Kraftstoff direkt in den Brennraum eines Zylinders eingespritzt und zerstäubt. Der Hauptvorteil der Direkteinspritzung besteht in einer gegenüber der indirekten Einspritzung größeren erzielbaren Hubraumleistung. Ferner ermöglicht die Direkteinspritzung betriebspunktabhängig den wahlweisen Betrieb der Verbrennungskraftmaschine in einem sogenannten Schichtlademodus oder einem Homogenmodus. Dabei wird im Schichtlademodus durch geeignete Einflussnahme auf im Brennraum herrschende Strömungsverhältnisse lediglich im Bereich einer Zündkerze ein zündfähiges Luft-Kraftstoff-Gemisch (eine sogenannte Gemischwolke) erzeugt. Währenddessen befindet sich im übrigen Brennraum überwiegend angesaugte Frischluft. Im Schichtlademodus können sehr magere Luft-Kraftstoff-Verhältnisse realisiert und somit große Kraftstoffeinsparungen bewirkt werden. Allerdings ist der Schichtbetrieb lediglich in einem Niedriglastbereich der Verbrennungskraftmaschine praktikabel. Bei höheren Lasten, beispielsweise in Beschleunigungsphasen oder bei Vollgas, aber auch bei niedrigen Motortemperaturen, etwa nach einem Kaltstart, ist in der Regel der Betrieb der Verbrennungskraftmaschine im Homogenbetrieb notwendig, um eine ausreichende Leistung zu erbringen oder eine zuverlässige Zündung zu gewährleisten. Der Homogenbetrieb zeichnet sich durch gleichmäßige Gemischverhältnisse im gesamten Brennraum aus.

Das Luft-Kraftstoff-Gemisch im Homogenbetrieb kann grundsätzlich fetter, das heißt kraftstoffreicher, als im Magerbetrieb erzeugt werden. Die Einspritzung erfolgt bei direkteinspritzenden Verbrennungskraftmaschinen während eines Ansaugtaktes während einer Abwärtsbewegung eines Kolbens. Ein auch als Wandfilmproblematik bekannter Nachteil der Direkteinspritzung besteht in der Tendenz des eingespritzten Kraftstoffes, sich an einem Kolbenboden, auf den der Einspritzstrahl üblicherweise gerichtet ist, abzuschlägen. Dieses Problem taucht hauptsächlich bei einem kalten Motor auf, wenn die niedrige Kolbentemperatur ein Verdampfen des Kraftstoffs verhindert und eine Abscheidung begünstigt. Während einer nachfolgenden, durch Zündung ausgelösten Verbrennung verbrennt der dem Kolbenboden anhaftende Kraftstofffilm nicht oder nur unvollständig. Bei einem anschließenden Ausstoßtakt des Zylinders kommt es dann zu einer teilweisen Ablösung des Films und einem Ausstoß unverbrannter Kohlenwasserstoffe (HC), der sich insgesamt in einer erhöhten HC-Emission bemerkbar macht. Dieses hauptsächlich in Kaltstartphasen auftretende Problem wird noch dadurch verstärkt, dass in diesen Phasen riachgeschaltete Katalysatoren zur Konvertierung unverbrannter Kohlenwasserstoffe in der Regel noch nicht ihre Mindestbetriebstemperatur erreicht haben. Infolgedessen werden unverbrannte Kohlenwasserstoffe unkonvertiert ausgestoßen. Nachteilig kommt hinzu, dass durch die Wandfilmproblematik hervorgerufene Kraftstoffverluste durch eine höhere Einspritzmenge kompensiert werden müssen.

US-A-5,979,400 beschreibt ein Verfahren zur Steuerung einer Kraftstoff-Direkteinspritzung einer fremdgezündeten Verbrennungskraftmaschine, wobei in Abhängigkeit unter anderem von einer Motortemperatur der Einspritzzeitpunkt sowie Einspritzdauer bestimmt werden. Dabei erfolgt die Bestimmung dieser Einspritzparameter derart, dass in Abhängigkeit von der Motortemperatur zwischen einem Homogenmodus mit einer im Ansaugtakt erfolgenden Einspritzung und einem Schichtlademodus mit einer im Kompressionstakt erfolgenden Einspritzung umgeschaltet wird. Innerhalb des Homogenmodus erfolgt keine Variation der Einspritzparameter.

US-A-5,113,833 betrifft eine nicht-direkteinspritzende und damit nicht schichtladefähige Verbrennungskraftmaschine mit externer Vorgemischbildung, bei der der Kraftstoff stromauf der Einlassventile in das Einlassrohr eingespritzt wird. Um ein übermäßiges Abscheiden des eingespritzten Kraftstoffs an den im Ausstoßtakt geschlossenen Einlassventilen zu vermeiden, wird bei kaltem Motor die Einspritzung aus dem Auslasstakt in den anschließenden Ansaugtakt verlagert, während welchem die Einlassventile geöffnet sind.

Aus EP-A-0 961 019 ist eine schichtladefähige Brennkraftmaschine mit Fremdzündung und Direkteinspritzung bekannt, bei der im Homogenbetrieb der Einspritzbeginn eine Funktion der Motortemperatur ist. Dabei wird jedoch nicht beschrieben, den Einspritzbeginn mit fallender Temperatur in Richtung spät zu verschieben.

Aufgabe der vorliegenden Erfindung ist es daher, ein Verfahren zur Steuerung einer gattungsgemäßen Kraftstoff-Direkteinspritzung zur Verfügung zu stellen, durch das eine Schadstoffemission, insbesondere bei niedrigen Temperaturen der Verbrennungskraftmaschine, reduziert wird.

Diese Aufgabe wird durch ein Verfahren mit den Merkmalen des Anspruchs 1 gelöst. Erfindungsgemäß ist vorgesehen, dass im Homogenmodus der Einspritzzeitpunkt in Abhängigkeit von einer Temperatur der Verbrennungskraftmaschine derart gesteuert wird, dass bei niedrigeren Temperaturen der Einspritzzeitpunkt in Richtung eines späteren Zeitpunktes verzögert wird. Die Temperatur der Verbrennungskraftmaschine fließt vorzugsweise als Kolbenboden- und/oder Brennraum- und/oder Kühlmitteltemperatur in die Steuerung ein. Dabei soll die Einspritzung bei niedrigeren Temperaturen verzögert werden, das heißt zu einem späteren Zeitpunkt erfolgen. Der Begriff Einspritzzeitpunkt soll in der vorliegenden Anmeldung als Einspritzbeginn verstanden werden. Indem der Einspritzzeitpunkt bei tiefen Temperaturen der Verbrennungskraftmaschine verzögert wird, wird erreicht, dass eine Distanz zwischen einem Einspritzventil und einem dem Verbrennungsraum zugewandten Kolbenboden größer ist als zu einem früheren Einspritzzeitpunkt. Damit verbleibt dem eingespritzten Kraftstoff mehr Zeit bis zum Erreichen des kalten Kolbenbodens, so dass höhere Kraftstoffanteile bereits verdampfen können. Im Resultat findet eine geringere Benetzung des kalten Kolbenbodens durch den Kraftstoff statt, als bei einer frühren Kraftstoffeinspritzung an einer verhältnismäßig höheren Kolbenposition innerhalb des Zylinders.

Gemäß einer besonders vorteilhaften Ausgestaltung der Erfindung wird eine Temperaturschwelle der Verbrennungskraftmaschine vorgegeben, bei deren Unterschreitung der Einspritzzeitpunkt verzögert wird. Auf diese Weise können insbesondere Temperaturen der Verbrennungskraftmaschine Rechnung getragen werden, die nach einem Kaltstart vorliegen. Die Temperaturschwelle kann sich vorteilhafterweise an einer Mindestarbeitstemperatur eines der Verbrennungskraftmaschine nachgeschalteten Katalysators orientieren. Auf diese Weise wird die Bildung unvollständig oder unverbrannter Kohlenwasserstoffe solange durch den beschriebenen Steuerungseingriff der Einspritzung unterdrückt, bis der Katalysator genügend aufgeheizt ist, um eine ausreichende HC-Konvertierung zu leisten oder - sofern er mit einer HC-Speicherfunktion ausgestattet ist - eine HC-Speicherung zu bewirken.

Der Einspritzzeitpunkt erfolgt bevorzugt bei einem Kurbelwellenwinkel von 70° bis 130° nach dem oberen Totpunkt OT des Kolbens, insbesondere bei 80° bis 110° nach dem oberen Totpunkt OT. Verglichen mit dem gemäß dem Stand der Technik üblichen Einspritzzeitpunkt bei Homogenbetrieb von 30° bis 60° nach OT wird mit den erfindungsgemäß späten Einspritzzeitpunkten die Kolbenbodenbenetzung und somit der HC-Ausstoß signifikant reduziert. Nach hinten wird der Einspritzzeitpunkt durch die Notwendigkeit begrenzt, in der verbleibenden Zeit bis zu einem folgenden Zündzeitpunkt eine möglichst weitgehende Homogenisierung innerhalb des Brennraumes des Zylinders zu erreichen. Im Spannungsfeld dieser einander entgegengesetzten Erfordernisse, Vermeidung der Kolbenbenetzung einerseits und homogene Gemischaufbereitung andererseits, stellen die bevorzugten Einspritzzeitpunkte eine beide Seiten befriedigende Lösung dar.

In besonders vorteilhafter Ausgestaltung der Erfindung wird ein Einspritzdruck in Abhängigkeit des Einspritzzeitpunktes derart variiert, dass der Einspritzdruck mit späterem Einspritzzeitpunkt erhöht wird. Durch diese Maßnahme kann die Einspritzung besonders spät erfolgen und eine homogene Gemischaufbereitung dennoch erzielt werden. Dabei hat es sich als besonders vorteilhaft erwiesen, dass bei einem Einspritzzeitpunkt von 130° Kurbelwellenwinkel nach OT der Einspritzdruck um Faktor 1,3 bis 1,7 gegenüber dem gleichen betriebswarmen Motorbetriebspunkt erhöht wird.

Die Temperatur der Verbrennungskraftmaschine kann für die Einspritzungssteuerung mittels eines bekannten Kühlmitteltemperatursensors oder mittels eines stromab der Verbrennungskraftmaschine in einem Abgas angeordneten Sensors ermittelt werden. Preiswerter und hinreichend genau ist die Möglichkeit, die Temperatur anhand von Betriebsparametern der Verbrennungskraftmaschine, beispielsweise einer Motorlast oder Motordrehzahl, zu berechnen oder aus einem gespeicherten Kennfeld zu ermitteln. Es ist jedoch ebenso vorteilhaft möglich, den Einspritzzeitpunkt nur indirekt mit der Motortemperatur zu korrelieren, indem etwa eine Betriebsdauer oder eine Kilometerleistung nach dem Start der Verbrennungskraftmaschine vorgegeben wird und der Einspritzzeitpunkt bis zu einem Erreichen des vorgegebenen Wertes verzögert wird.

Weitere vorteilhafte Ausgestaltungen sind Gegenstand der übrigen Unteransprüche.

Die Erfindung wird nachfolgend in Ausführungsbeispielen anhand der zugehörigen Zeichnungen näher erläutert. Es zeigen:
- Figur 1: schematisch einen teilweisen aufgeschnittenen Zylinder mit Direkteinspritzung und
- Figur 2: eine Prinzipdarstellung der Korrelation von Kolbenposition und Kurbelwellenwinkel.

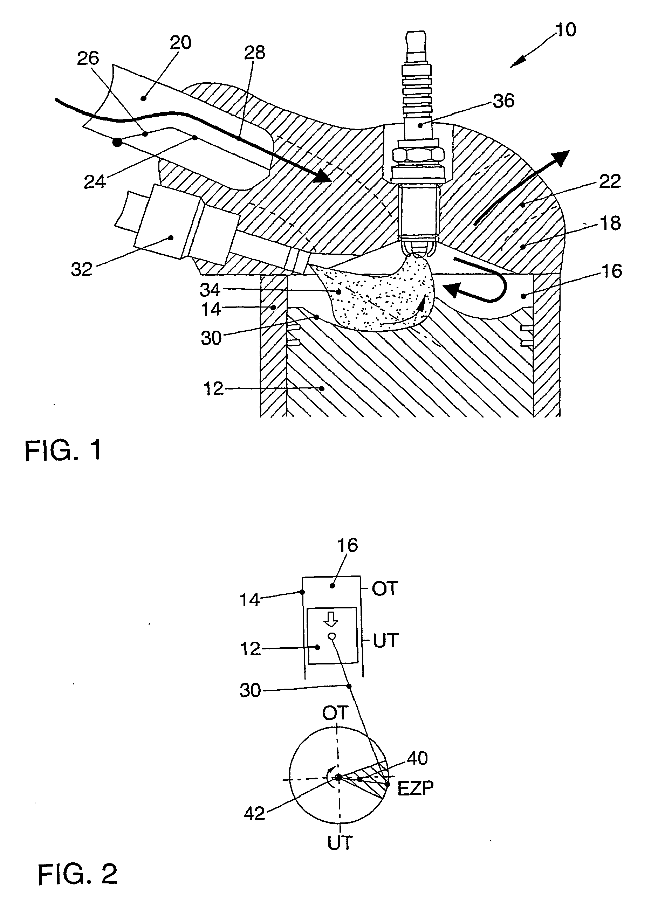

Figur 1 zeigt schematisch alle brennverfahrensrelevanten Komponenten eines direkteinspritzenden und insgesamt mit 10 bezeichneten Zylinders. Ein Kolben 12 ist innerhalb eines Zylindergehäuses 14 entlang dessen Längsachse beweglich gelagert. Ein Brennraum 16 wird durch den Kolben 12, das Zylindergehäuse 14 sowie einen Zylinderkopf 18 eingeschlossen. Zwei hier nur angedeutete Luftkanäle, nämlich ein Einlasskanal 20 sowie ein Auslasskanal 22, sind in den Zylinderkopf 18 eingearbeitet. Ventile, die üblicherweise einen Durchfluss durch die Luftkanäle 20, 22 steuern, sind aus Gründen der Übersichtlichkeit hier nicht dargestellt. Der Einlasskanal 20 ist durch ein eingegossenes Blech 24, einem sogenannten Tumbleblech, in eine obere und eine untere Hälfte unterteilt. Die untere Hälfte kann durch eine diskontinuierlich betätigbare Ladungsbewegungsklappe 26 betriebspunktabhängig verschlossen und geöffnet werden.

Der Verschluss der unteren Kanalhälfte, der zum Beispiel im dargestellten Schichtladebetrieb erfolgt, bewirkt im verbleibenden oberen Kanalquerschnitt eine Beschleunigung des Luftstromes 28, der dann bevorzugt gemäß dem in dem rechten Teil des Brennraums 16 dargestellten Pfeil in den Brennraum 16 einströmt. Dort trifft der Luftstrom 28 auf eine in einem Kolbenboden 30 eingearbeitete Strömungsmulde (rechter Kolbenbereich gemäß Figur 1) und wird umgelenkt. Unterhalb des Einlasskanals 20 ist ein Hochdruckeinspritzventil 32 im Zylinderkopf 18 positioniert. Der eingespritzte Kraftstoff trifft auf eine ebenfalls im Kolben 12 eingearbeitete Kraftstoffmulde (linker Kolbenbereich gemäß Figur 1). Im dargestellten Schichtladebetrieb wird der während einer Kompressionsphase eingespritzte Kraftstoff durch die entgegengerichtete Luftströmung abgebremst, so dass er ausschließlich im einlassseitigen Bereich des Brennraums 16 verbleibt und dort eine Gemischwolke 34 ausbildet. Die Gemischwolke 32 erstreckt sich bis zu einer zentral im Zylinderkopf 18 angeordneten Zündkerze 36. Durch diese vorwiegend auf den Schichtladebetrieb optimierte geometrische Gestaltung wird eine stabile Entflammung im Schichtladebetrieb gewährleistet.

Kann an Betriebspunkten der Verbrennungskraftmaschine 10, beispielsweise unmittelbar nach einem Kaltstart, im sehr mageren Schichtladebetrieb keine stabile Entzündung gewährleistet werden, wird in einen Homogenbetrieb umgeschaltet, bei dem im gesamten Brennraum 16 ein homogenes Luft-Kraftstoff-Gemisch erzeugt wird. Hierfür kann die Ladungsbewegungsklappe 26 geöffnet werden. Um dem eingespritzten Kraftstoff eine ausreichend lange Zeit zur Ausbreitung im Brennraum 16 zu gewähren, ist es bisher üblich, die Einspritzung im Homogenbetrieb zu einem verhältnismäßig frühen Zeitpunkt, nämlich bei einem Kurbelwellenwinkel von 30° bis 60° vorzunehmen.

Der Zusammenhang zwischen Kurbelwellenwinkel und der Kolbenposition ist in Figur 2 schematisch dargestellt. Der Kolben 12 ist in dem Zylindergehäuse 14 zwischen einem oberen Totpunkt OT und einem unteren Totpunkt UT vertikal beweglich angeordnet. Diese Bewegung wird über eine Pleuelstange 38 in eine Rotationsbewegung einer Kurbelwelle 40 übersetzt. Die mit 42 bezeichnete Wellenachse der Kurbelwelle 40 verläuft senkrecht zur Papierebene.

Nachteilig an der üblichen, verhältnismäßig frühen Kraftstoffeinspritzung im Homogenbetrieb ist, dass aufgrund der geringen Distanz zwischen Einspritzventil 32 und Kolbenboden 30 ein verhältnismäßig großer Anteil des Kraftstoffes an dem Kolbenboden 30 abschlägt und dort einen flüssigen Kraftstofffilm bildet. Dieses Problem tritt hauptsächlich bei tiefen Temperaturen der Verbrennungskraftmaschine 10 und des Kolbens 12, insbesondere nach einem Kaltstart auf. Mit zunehmender Erwärmung des Kolbens 12 wird dieser Effekt gemindert. Bei hohen Motortemperaturen unterstützt der dann heiße Kolben sogar den Verdampfungsvorgang, so dass dann frühe Einspritzpunkte günstigere HC-Emissionen aufweisen. Der am Kolbenboden 30 abgeschiedene Kraftstoff ist nur schwer entzündbar und steht für eine anschließende Verbrennung nicht oder nur unvollständig zur Verfügung. Infolgedessen muss, um eine stabile Zündung und eine ausreichende Leistung zu erreichen, im Homogenbetrieb bei kaltem Motor eine höhere eingespritzte Kraftstoffmenge den abgeschiedenen Kraftstoff kompensieren. Hierdurch steigt der Kraftstoffverbrauch. Ferner wird der Kraftstofffilm in einem Ausstoßtakt teilweise abgerissen und durch den Auslasskanal 22 ausgestoßen. Da gerade während einer Startphase ein nachfolgend geschalteter Katalysator häufig seine Mindestbetriebstemperatur noch nicht erreicht hat, wird der Kraftstoff in Form von unverbrannten Kohlenwasserstoffen HC unkonvertiert ausgelassen.

Erfindungsgemäß wird dieses Problem gelöst, indem der Einspritzzeitpunkt EZP temperaturabhängig gesteuert wird. Bevorzugterweise wird dafür eine Temperaturschwelle für eine Temperatur der Verbrennungskraftmaschine vorgegeben, die besonders vorteilhaft der Mindestbetriebstemperatur des Katalysators entspricht. Unterhalb dieser Temperaturschwelle wird der Einspritzzeitpunkt EZP verzögert. Insbesondere erfolgt der Einspritzzeitpunkt EZP bei einem Kurbelwellenwinkel von 70° bis 130° nach dem oberen Totpunkt OT. Dieser Einspritzbereich ist in der Figur 2 durch den schraffierten Bereich gekennzeichnet. Durch diesen späten Einspritzzeitpunkt EZP wird aufgrund der größeren Distanz zwischen dem Einspritzventil 32 und dem Kolbenboden 30 erreicht, dass der eingespritzte Kraftstoff nahezu vollständig verdampft und nicht den Kolbenboden 30 benetzt. Um ein zündfähiges Gemisch zu erzeugen, muss infolgedessen eine geringere Kraftstoffmenge zugemessen werden. Gleichzeitig wird die HC-Emission signifikant verringert. Auf der anderen Seite ist der erfindungsgemäße Einspritzbereich derart optimiert, dass noch genügend Zeit verbleibt, um eine homogene Gemischaufbereitung zu gewährleisten. Diese kann durch eine Erhöhung des Einspritzdruckes auf vorzugsweise Faktor 1,3 bis 1,7 gegenüber dem gleichen betriebswarmen Motorbetriebspunkt aufgrund feinerer Kraftstoffverstäubung noch weiter beschleunigt werden, so dass in diesem Falle die Einspritzung wegen der bei höherem Kraftstoffdruck auch höheren Eindringtiefe in den Brennraum erst sehr spät, etwa bei 130° Kurbelwellenwinkel nach OT, vorgenommen werden kann.

Die Temperatur der Verbrennungskraftmaschine fließt in die Steuerung insbesondere als Kolbenboden-, Brennraum-, Kühlmitteltemperatur oder einen aus diesen Größen gemittelten Wert ein. Die Temperaturen können direkt mit geeigneten Temperatursensoren erfasst und/oder mit Hilfe bekannter Modelle berechnet werden.

## Patentansprüche

1. Verfahren zur Steuerung einer Kraftstoff-Direkteinspritzung einer fremdgezündeten, schichtladefähigen und wenigstens zeitweise in einem Homogenmodus betriebenen Verbrennungskraftmaschine, wobei mindestens ein Kolben (12) sich in einem Zylinder (10) zwischen einem oberen Totpunkt (OT) und einem unteren Totpunkt (UT) auf und ab bewegt, die Bewegung des Kolbens (12) in eine Drehbewegung einer Kurbelwelle (40) übersetzt wird und im Homogenmodus eine Kraftstoffeinspritzung mit einem vorgebbaren Einspritzzeitpunkt während einer Kolbenabwärtsbewegung eines Ansaugtaktes durchgeführt wird, wobei der Einspritzzeitpunkt (EZP) in Abhängigkeit von einer Temperatur der Verbrennungskraftmaschine gesteuert wird, **dadurch gekennzeichnet, dass** die Steuerung des Einspritzzeitpunktes (EZP) im Homogenmodus derart erfolgt, dass bei niedrigeren Temperaturen der Einspritzzeitpunkt (EZP) in Richtung eines späteren Zeitpunktes verzögert wird.

2. Verfahren nach Anspruch 1, **dadurch gekennzeichnet, dass** die Temperatur der Verbrennungskraftmaschine als Kolbenbodentemperatur und/oder Brennraumtemperatur und/oder Kühlmitteltemperatur in die Steuerung einfließt.

3. Verfahren nach Anspruch 1 oder 2, **dadurch gekennzeichnet, dass** der Einspritzzeitpunkt (EZP) bei Unterschreitung einer vorgebbaren Temperaturschwelle, insbesondere nach einem Kaltstart der Verbrennungskraftmaschine, verzögert wird.

4. Verfahren nach Anspruch 3, **dadurch gekennzeichnet, dass** die Temperaturschwelle mit einer Mindestarbeitstemperatur eines der Verbrennungskraftmaschine nachgeschalteten Katalysators korreliert.

5. Verfahren nach einem der vorhergehenden Ansprüche, **dadurch gekennzeichnet, dass** der Einspritzzeitpunkt (EZP) bei einem Kurbelwellenwinkel von 70° bis 130° nach dem oberen Totpunkt (OT), insbesondere bei 80° bis 110° nach OT erfolgt.

6. Verfahren nach einem der vorhergehenden Ansprüche, **dadurch gekennzeichnet, dass** ein Einspritzdruck in Abhängigkeit des Einspritzzeitpunkts (EZP) variiert wird, wobei der Einspritzdruck mit späterem Einspritzzeitpunkt (EZP) erhöht wird.

7. Verfahren nach Anspruch 6, **dadurch gekennzeichnet, dass** bei einem Einspritzzeitpunkt (EZP) bei 130° Kurbelwellenwinkel nach dem oberen Totpunkt (OT) der Einspritzdruck um einen Faktor 1,3 bis 1,7 gegenüber einem gleichen betriebswarmen Motorbetriebspunkt erhöht wird.

8. Verfahren nach einem der vorhergehenden Ansprüche, **dadurch gekennzeichnet, dass** die Temperatur der Verbrennungskraftmaschine mit einem Kühlmitteltemperatursensor oder einem stromab der Verbrennungskraftmaschine in einem Abgas angeordneten Temperatursensor ermittelt oder berechnet wird.

9. Verfahren nach einem der Ansprüche 1 bis 7, **dadurch gekennzeichnet, dass** die Temperatur der Verbrennungskraftmaschine anhand von Betriebsparametern aus einem gespeicherten Kennfeld ermittelt oder berechnet wird.

10. Verfahren nach einem der Ansprüche 1 bis 7, **dadurch gekennzeichnet, dass** der Einspritzzeitpunkt für eine vorgebbare Betriebsdauer oder einer vorgebbaren Kilometerleistung nach Start der Verbrennungskraftmaschine verzögert wird.

## Claims

1. Method for controlling the direct injection of fuel in a spark-ignition internal combustion engine which is capable of stratified-charge operation and is operated, at least at times, in a homogeneous mode, at least one piston (12) moving up and down in a cylinder (10) between a top dead centre (OT) and a bottom dead centre (UT), the movement of the piston (12) being transformed into a rotational movement of a crankshaft (40) and, in the homogeneous mode, fuel being injected at a predefineable injection time during a downwards movement of the piston in an intake stroke, the injection time (EZP) being controlled as a function of a temperature of the internal combustion engine, **characterized in that** the injection time (EZP) in the homogeneous mode is controlled in such a way that, at low temperatures, the injection time (EZP) is delayed towards a later time.

2. Method according to Claim 1, **characterized in that** the temperature of the internal combustion engine which is taken into account by the controller is the piston head temperature and/or the combustion chamber temperature and/or the coolant temperature.

3. Method according to Claim 1 or 2, **characterized in that** the injection time (EZP) is delayed when the temperature falls below a predefineable temperature threshold, in particular after a cold start of the internal combustion engine.

4. Method according to Claim 3, **characterized in that** the temperature threshold correlates with a minimum working temperature of a catalytic converter which is connected downstream of the internal combustion engine.

5. Method according to one of the preceding claims, **characterized in that** the injection time (EZP) occurs at a crankshaft angle of 70° to 130° after top dead centre (OT), in particular at 80° to 110° after OT.

6. Method according to one of the preceding claims, **characterized in that** an injection pressure is varied as a function of the injection time (EZP), the injection pressure being increased as the injection time (EZP) moves later.

7. Method according to Claim 6, **characterized in that** at an injection time (EZP) at a crankshaft angle of 130° after top dead centre (OT), the injection pressure is increased by a factor of 1.3 to 1.7 relative to an equivalent engine operating point at operating temperature.

8. Method according to one of the preceding claims, **characterized in that** the temperature of the internal combustion engine is determined or calculated using a coolant temperature sensor or a temperature sensor which is arranged in an exhaust gas flow downstream of the internal combustion engine.

9. Method according to one of Claims 1 to 7, **characterized in that** the temperature of the internal combustion engine is determined or calculated on the basis of operating parameters from a stored characteristic diagram.

10. Method according to one of Claims 1 to 7, **characterized in that** the injection time is delayed for a predefineable period of operation or a predefineable distance travelled after the internal combustion engine is started.

## Revendications

1. Procédé de contrôle d'une injection directe de carburant d'un moteur à combustion interne à allumage commandé, apte à la charge stratifiée et au moins temporairement exploité en un mode homogène, au moins un piston (12) se déplaçant en montant et en descendant dans un cylindre (10), entre un point mort supérieur (OT) et un point mort inférieur (UT), le déplacement du piston (12) étant transformé en une rotation d'un vilebrequin (40) et (en mode homogène) une injection de carburant avec un moment d'injection prédéfinissable étant effectuée pendant un déplacement en descente d'un piston d'une course d'aspiration, le moment d'injection (EZP) étant contrôlé en fonction d'une température du moteur à combustion interne, **caractérisé en ce que** le contrôle du moment d'injection (EZP) en mode homogène est réalisé de façon à ce qu'à basses températures, le moment d'injection (EZP) soit temporisé dans le sens d'un moment ultérieur.

2. Procédé selon la revendication 1, **caractérisé en ce que** la température du moteur à combustion interne est prise en compte dans le contrôle en tant que température de tête de piston et/ou en tant que température de chambre de combustion et/ou en tant que température de fluide de refroidissement.

3. Procédé selon la revendication 1 ou 2, **caractérisé en ce que** le moment d'injection (EZP) est temporisé lorsqu'un seuil de température prédéfinissable n'est pas atteint, notamment après un démarrage à froid du moteur à combustion interne.

4. Procédé selon la revendication 3, **caractérisé en ce que** le seuil de température est mis en corrélation avec une température minimale de fonctionnement d'un catalyseur monté en aval du moteur à combustion interne.

5. Procédé selon l'une quelconque des revendications précédentes, **caractérisé en ce que** le moment d'injection (EZP) se situe à un angle du vilebrequin de 70° à 130°, après le point mort supérieur (OT), notamment à 80° à 110° après OT.

6. Procédé selon l'une quelconque des revendications précédentes, **caractérisé en ce qu'**une pression d'injection subit des variations en fonction du moment d'injection (EZP), la pression d'injection étant augmentée avec un moment d'injection plus tardif (EZP).

7. Procédé selon la revendication 6, **caractérisé en ce qu'**avec un moment d'injection (EZP) lorsque l'angle du vilebrequin est de 130° après le point mort supérieur (OT), la pression d'injection est augmentée d'un facteur de 1,3 à 1,7 par rapport à un point de fonctionnement dynamique d'un moteur qui est à une température de fonctionnement identique.

8. Procédé selon l'une quelconque des revendications précédentes, **caractérisé en ce** la température du moteur à combustion interne est déterminée ou calculée à l'aide d'un capteur de température du fluide de refroidissement ou à l'aide d'un capteur de température monté dans un tronçon de gaz d'échappement, en aval du moteur à combustion interne.

9. Procédé selon l'une quelconque des revendications 1 à 7, **caractérisé en ce que** la température du moteur à combustion interne est déterminée ou calculée à l'aide de paramètres de service, issus d'un champ caractéristique mémorisé.

10. Procédé selon l'une quelconque des revendications 1 à 7, **caractérisé en ce que** le moment d'injection est temporisé pour une durée de fonctionnement prédéfinie ou un kilométrage prédéfini après le démarrage du moteur à combustion interne.
